# EUROPÄISCHE PATENTSCHRIFT

(11) **EP 3 682 998 B1**
(45) Veröffentlichungstag und Bekanntmachung des Hinweises auf die Patenterteilung: **15.04.2026**
(21) Anmeldenummer: 19206804.7
(22) Anmeldetag: 04.11.2019
(51) Int. Cl.: B23K 11/24, B23K 11/36

(54) **SCHWEISSANLAGE UND VERFAHREN ZUM ÜBERTRAGEN VON SPEZIFISCHEN DATEN ZUM HERSTELLEN EINER SCHWEISSVERBINDUNG ZWISCHEN SCHWEISSSTEUERUNGEN DER SCHWEISSANLAGE**
WELDING INSTALLATION AND METHOD FOR TRANSMISSION OF SPECIFIC DATA FOR THE ESTABLISHMENT OF A CONNECTION BETWEEN WELDING CONTROLLERS OF THE WELDING INSTALLATION
INSTALLATION DE SOUDAGE ET MÉTHODE DE TRANSMISSION DE DONNÉES POUR ÉTABLIR UNE CONNECTION ENTRE DES CONTRÔLEURS DE SOUDAGE DE LADITE INSTALLATION.

(30) Priorität: 17.01.2019 DE 102019200520
(43) Veröffentlichungstag der Anmeldung: 22.07.2020
(73) Patentinhaber: Robert Bosch GmbH, 70442 Stuttgart (DE)
(72) Erfinder: Kalia, Dhruv, 71540 Murrhardt (DE)

(56) Entgegenhaltungen:
- US-A1- 2013 075 380
- US-A1- 2013 119 036
- US-A1- 2014 263 225

## Beschreibung

Die vorliegende Erfindung bezieht sich auf eine Schweißanlage zum Übertragen von spezifischen Daten zum Herstellen einer Schweißverbindung zwischen Schweißsteuerungen der Schweißanlage.

In Produktionsanlagen, wie beispielsweise Fertigungsstraßen für Fahrzeuge usw., werden metallische Teile durch Schweißen mit Hilfe eines Schweißwerkzeugs einer Schweißvorrichtung verbunden. Das Schweißwerkzeug ist beispielsweise eine Schweißzange, die von einem Schweißtransformator mit einem elektrischen Schweißstrom versorgt wird. Insbesondere ist das Schweißwerkzeug ein Widerstandsschweißwerkzeug.

In derartigen Produktionsanlagen werden oft mehr als zwei Schweißsteuerungen oder sogar mehr als zwei Schweißzellen und/oder Schweißlinien eingesetzt. Hierbei kann jede Schweißsteuerung mindestens ein Schweißwerkzeug ansteuern, das in der Regel zum Schweißen von einem Roboter im Raum geführt wird.

Insbesondere ist es im automatisierten Karosserierohbau nicht möglich, alle Schweißverbindungen, insbesondere Schweißpunkte, für die Verbindung der Fahrzeugkarosserie an einem Ort zu schweißen. Daher ist der gesamte Schweißvorgang zum Herstellen der Karosserie auf mehrere Schweißzellen aufgeteilt, in welchen sich einige Roboter synchronisieren, um verschiedene Teile eines Fahrzeugs durch Schweißen zu verbinden.

Bei der Konfiguration der Schweißzellen kann festgelegt werden, welche Schweißzellen welche Schweißpunkte schweißen sollen. Daher können die Daten darüber, welches Schweißwerkzeug der Schweißzelle welchen Schweißpunkt herstellen soll, entweder vorher in den Schweißsteuerungen festgelegt werden, oder die Daten werden der Schweißsteuerung je nach Bedarf und/oder Trigger von einer intelligenten Datenbank zugespielt.

US 2014/0263225 A1 zeigt ein System und ein Verfahren zur Erzeugung und Modifizierung eines Schweißablaufs in einer Schweißzelle.

Im Betrieb der Produktionsanlage kann es jedoch aufgrund von aktuellen Ereignissen, wie unvorhergesehener Ausfall eines Schweißwerkzeugs, insbesondere durch Reinigung seiner Schweißelektrodenkappen, Verschmutzung an einem zu schweißenden Werkstück, usw., gefordert sein, dass die Zuordnung der herzustellenden Schweißpunkte zu den Schweißwerkzeugen und/oder den verschiedenen Schweißzellen kurzfristig geändert werden muss. Diese Änderung der Zuordnung kann ein Kopieren oder Verschieben oder Löschen, usw. der Daten darüber erfordern, welches Schweißwerkzeug welchen Schweißpunkt herstellen muss.

Problematisch ist jedoch, dass die Herstellung jedes Schweißpunkts bestimmte Qualitätsanforderungen erfüllen muss, die zuvor spezifiziert sind. Daher sind die Daten, wie Ausgestaltung des Schweißwerkzeugs zum Herstellen des Schweißwerkzeugs, wie Bestückung mit speziellen Elektrodenkappen, usw., Anpressdruck an den zu schweißenden Bauteilen, Schweißstrom, Schweißdauer, usw. zuvor von einem Benutzer programmiert und anschließend getestet worden.

Muss die Zuordnung der herzustellenden Schweißpunkte zu den Schweißwerkzeugen und/oder Schweißsteuerungen kurzfristig geändert werden, ist daher ein Transfer der Daten zur Herstellung eines speziellen Schweißpunkts wünschenswert, um ohne großen Aufwand weiter die Qualitätsanforderungen erfüllen zu können. Sind hierbei die zugehörigen Schweißsteuerungen und/oder die Schweißzellen nicht verbunden, ist ein Transfer zumindest nicht in der geforderten Zeit und/oder nur mit sehr großem Aufwand möglich.

Daher ist es Aufgabe der vorliegenden Erfindung, eine Schweißanlage und ein Verfahren zum Übertragen von spezifischen Daten zum Herstellen einer Schweißverbindung zwischen Schweißsteuerungen der Schweißanlage bereitzustellen, mit welchen die zuvor genannten Probleme gelöst werden können. Insbesondere sollen eine Schweißanlage und ein Verfahren zum Herstellen von spezifischen Daten zum Schweißen einer Schweißverbindung zwischen Schweißsteuerungen der Schweißanlage bereitgestellt werden, bei welchen im Betrieb der Schweißanlage Schweißwerkzeugen schnell, sicher und kostengünstig neue Schweißaufgaben zum Herstellen von Schweißverbindungen mit der geforderten Schweißqualität zugeordnet werden können.

Diese Aufgabe wird durch eine Schweißanlage nach Anspruch 1 gelöst. Die Schweißanlage hat mindestens zwei Schweißsteuerungen, die jeweils zum Speichern von Schweißverbindungsdaten zum Herstellen der Schweißverbindung ausgestaltet sind, mindestens ein Schweißwerkzeug zur Herstellung einer Schweißverbindung an mindestens einem Werkstück unter Steuerung einer der mindestens zwei Schweißsteuerungen auf der Grundlage der gespeicherten Schweißverbindungsdaten, und eine Kommunikationseinrichtung zur Kommunikation mit den mindestens zwei Schweißsteuerungen und eine Bedienvorrichtung, die mit der Kommunikationseinrichtung verbunden ist, wobei die Kommunikationseinrichtung ausgestaltet ist, eine Übertragung von Schweißverbindungsdaten, die auf der Kommunikationseinrichtung gespeichert sind, von einer Quellen-Schweißsteuerung der mindestens zwei Schweißsteuerungen auf eine Ziel-Schweißsteuerung der mindestens zwei Schweißsteuerungen zu initiieren, wie in Anspruch 1 beschrieben.

Erfindungsgemäß ist die Kommunikationseinrichtung ausgestaltet, sich bei Verbindung mit den mindestens zwei Schweißsteuerungen zur Inbetriebnahme die Schweißverbindungsdaten zum Herstellen der Schweißverbindung zu beschaffen und zu speichern.

Mit der Schweißanlage ist es möglich, mit sehr geringem Aufwand und somit sehr kostengünstig die Zuordnung der herzustellenden Schweißverbindung(en) zu den Schweißwerkzeugen kurzfristig zu ändern und dennoch Schweißverbindungen mit der geforderten Schweißqualität herzustellen. Eine derartige neue Zuordnung bzw. Programmierung der Übertragung ist sogar möglich, wenn die herzustellende(n) Schweißverbindung(en) zunächst für Ziel-Schweißsteuerungen bzw. Schweißwerkzeuge spezifiziert wurde(n), die derzeit nicht verfügbar sind.

Zudem entstehen mit der beschriebenen Zuordnung keine unnötigen Doppeldatensätze, welche unnötige Arbeit bedeuten, den Speicherplatz belegen und die Verwaltung und Bedienung der Schweißanlage erschweren.

Dadurch kann ein Transfer der Daten für die herzustellende(n) Schweißverbindung(en) in der geforderten Zeit mit sehr geringem Aufwand und mit vernachlässigbarer Fehlerquote erfolgen. Im Ergebnis kann die Qualität der Produktion der herzustellenden Schweißverbindung(en) mit der Schweißanlage verbessert werden, so dass weniger fehlerhafte Produkte produziert werden, die auszusortieren sind.

Die Schweißanlage kann somit sehr dynamisch auf geänderte Betriebsbedingungen reagieren. Als Folge davon wird die Wahrscheinlichkeit minimiert, dass die Schweißanlage einen Produktionsstopp einer übergeordneten industriellen Anlage verursacht.

Insgesamt trägt die Schweißanlage somit zur Schonung von Ressourcen und zur Kostensenkung für die Herstellung von Gegenständen sowie zur Kostensenkung des Betriebs einer übergeordneten industriellen Anlage bei.

Vorteilhafte weitere Ausgestaltungen der Schweißanlage sind in den abhängigen Ansprüchen angegeben.

Möglicherweise agiert die Kommunikationseinrichtung zur Kommunikation mit den mindestens zwei Schweißsteuerungen als Client und die mindestens zwei Schweißsteuerungen agieren jeweils als Server.

In einer weiteren speziellen Ausgestaltung kann die Kommunikationseinrichtung ausgestaltet sein, für die Übertragung der Schweißverbindungsdaten von einem Benutzer abzufragen, ob die Schweißverbindungsdaten von der Quellen-Schweißsteuerung auf die Ziel-Schweißsteuerung kopiert werden sollen oder aufgrund der Übertragung auf der Quellen-Schweißsteuerung gelöscht werden sollen.

Möglicherweise ist die Kommunikationseinrichtung für die Übertragung der Schweißverbindungsdaten ausgestaltet, von einem Benutzer einen Namen für den Ziel-Schweißverbindungsdatensatz, die Ziel-Schweißsteuerung, die Ziel-Schweißaufgabe, mit welcher die Schweißverbindung mit den zu übertragenden Schweißverbindungsdaten unter Steuerung durch die Ziel-Schweißsteuerung herzustellen ist, und das Ziel-Schweißwerkzeug abzufragen, mit welchem die Ziel-Schweißaufgabe durchgeführt werden soll.

Hierbei kann die Bedienvorrichtung eingerichtet sein, , zur Ausgabe der Abfragen und/oder von Statusmeldungen über die Übertragung an den Benutzer.

Denkbar ist, dass die Kommunikationseinrichtung ausgestaltet ist, mindestens eine Datei zur Kommunikation mit den mindestens zwei Schweißsteuerungen zu erzeugen, wenn die Ziel-Schweißsteuerung beim Programmieren der Übertragung zwischen Quellen-Schweißsteuerung und Ziel-Schweißsteuerung nicht verfügbar ist.

Denkbar ist, dass die mindestens eine Datei eine xml-Datei ist.

Hierbei kann die Quellen-Schweißsteuerung und die Ziel-Schweißsteuerung zum Parsen der Informationen in der mindestens einen Datei ausgestaltet sein und ausgestaltet sein, die geparsten Informationen zu verwenden, die für die Schweißsteuerung für die Übertragung relevant sind.

Eine der Schweißsteuerungen kann ausgestaltet sein, auf der Grundlage der gespeicherten Schweißverbindungsdaten mindestens ein Schweißwerkzeug anzusteuern.

Möglicherweise hat die Schweißanlage zudem eine Vorrichtung, die einen Arm zum Bewegen des Schweißwerkzeugs im Raum und eine Steuereinrichtung zur Steuerung des Arms aufweist, wobei die Steuereinrichtung der Vorrichtung den mindestens zwei Schweißsteuerungen untergeordnet ist. Zusätzlich oder alternativ kann eine Erfassungseinrichtung vorgesehen sein zur Erfassung von Größen beim Herstellen einer Schweißverbindung mit dem Schweißwerkzeug, wobei die mindestens zwei Schweißsteuerungen ausgestaltet sind, die erfassten Größen beim Steuern des Schweißwerkzeugs zu berücksichtigen.

Optional hat eine Schweißsteuerung eine Steuereinrichtung zur Steuerung des Schweißtransformators und des Schweißwerkzeugs der Schweißanlage, und eine Überwachungseinrichtung zur Überwachung der Schweißqualität der mit dem Schweißwerkzeug hergestellten Schweißverbindung und Ausgabe einer Meldung in Bezug auf das Überwachungsergebnis.

Weitere mögliche Implementierungen der Erfindung umfassen auch nicht explizit genannte Kombinationen von zuvor oder im Folgenden bezüglich des Ausführungsbeispiels beschriebener Merkmale oder Ausführungsformen, soweit diese im Schutzumfang der Ansprüche enthalten sind. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein stark vereinfachtes schematisches Blockschaltbild einer industriellen Anlage mit einer Schweißanlage gemäß einem ersten Ausführungsbeispiel; und
Fig. 2 eine stark vereinfachte schematische Ansicht eines Teils der Schweißanlage von Fig. 1.

In den Figuren sind gleiche oder funktionsgleiche Elemente, sofern nichts Anderes angegeben ist, mit denselben Bezugszeichen versehen.

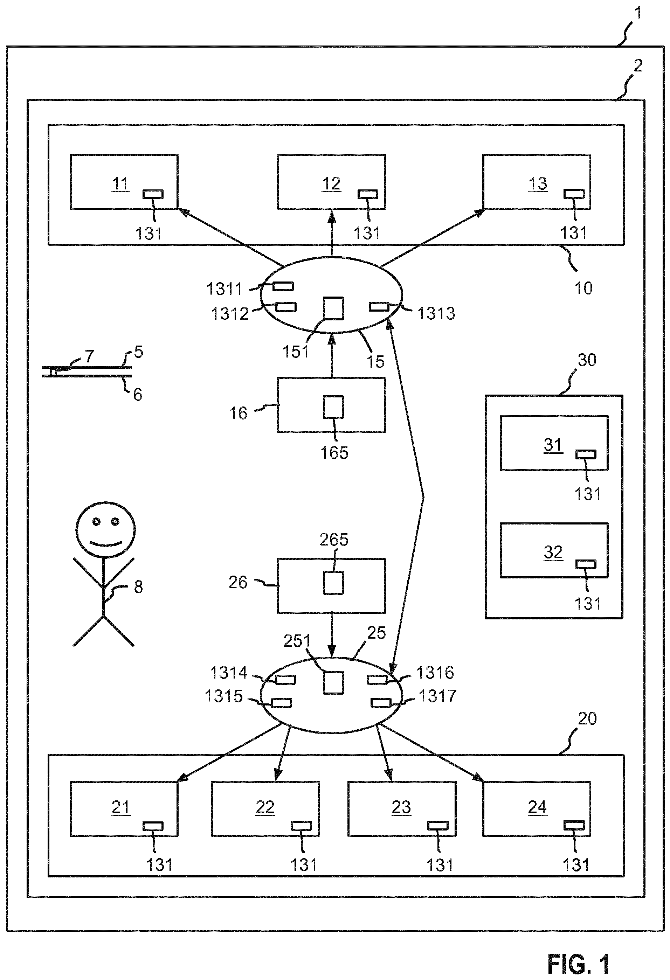

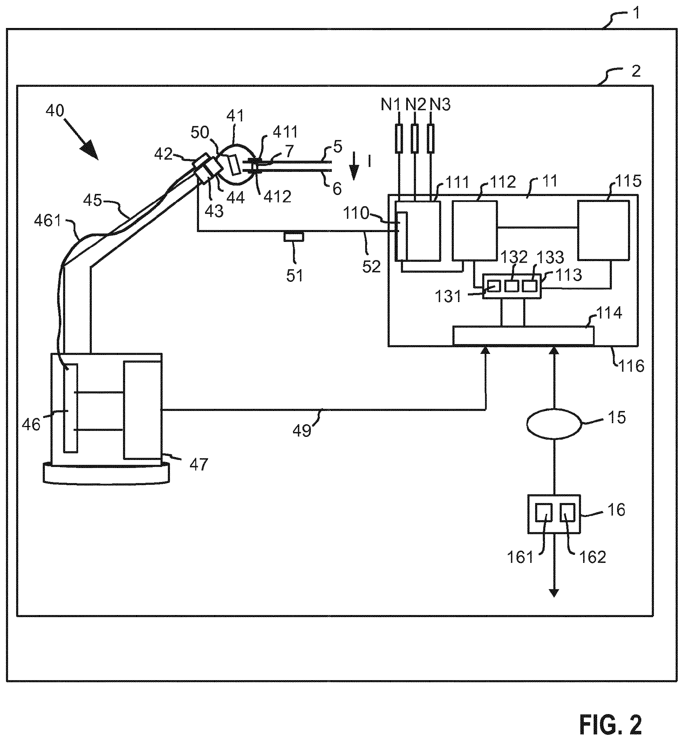

Fig. 1 zeigt eine industrielle Anlage 1 mit einer Schweißanlage 2. Die industrielle Anlage 1 ist beispielsweise eine Fertigungsstraße für Fahrzeuge, Möbel, Bauwerke, usw., in welcher metallische Werkstücke 5, 6 durch Schweißen derart verbunden werden, dass eine Schweißverbindung 7 hergestellt wird. Dies ist in Fig. 2 noch genauer gezeigt und nachfolgend beschrieben. Ein Benutzer 8 kann die industrielle Anlage 1 und/oder die Schweißanlage 2 zumindest teilweise konfigurieren oder steuern.

Die Schweißanlage 2 hat eine erste Bearbeitungslinie 10, eine zweite Bearbeitungslinie 20 und eine dritte Bearbeitungslinie 30. Zudem hat die Schweißanlage 2 eine erste und zweite Kommunikationseinrichtung 15, 25 und eine erste und zweite Bedienvorrichtung 16, 26. Die erste Bearbeitungslinie 10 ist beispielsweise in einer anderen Halle angeordnet als die zweite Bearbeitungslinie 20. Die dritte Bearbeitungslinie 30 ist beispielsweise auf einem anderen Stockwerk als die zweite Bearbeitungslinie 20 angeordnet.

Die gezeigten Komponenten der Schweißanlage 2 dienen zur Erläuterung der Funktion der Erfindung. Die Anzahl der Bearbeitungslinien 10, 20, 30 und deren Ausgestaltung ist beliebig wählbar.

Bei dem speziellen Beispiel von Fig. 1 hat die erste Bearbeitungslinie 10 eine erste Schweißsteuerung 11, eine zweite Schweißsteuerung 12 und eine dritte Schweißsteuerung 13. Außerdem hat die zweite Bearbeitungslinie 20 eine erste Schweißsteuerung 21, eine zweite Schweißsteuerung 22, eine dritte Schweißsteuerung 23 und eine vierte Schweißsteuerung 24. Zudem hat die dritte Bearbeitungslinie 30 eine erste Schweißsteuerung 31 und eine zweite Schweißsteuerung 32. In den Schweißsteuerungen 11 bis 13, 21 bis 24, 31, 32 sind jeweils interne Grundparameter oder Sollwerte 131, insbesondere Schweißverbindungsdaten 1311 bis 1317 der einzelnen Schweißsteuerungen, gespeichert, die zwischen den Schweißsteuerungen 11 bis 13, 21 bis 24, 31, 32 austauschbar sind.

Die Schweißverbindungsdaten 1311 bis 1317 für einen Schweißpunkt oder eine Schweißnaht als Schweißverbindung 7, usw. umfassen Daten, wie Schweißverbindung-Identifikationsnummer, Schweißverbindung-Beschreibung, Schweißaufgabe-Name, Schweißwerkzeug-Name, usw. Eine Schweißverbindung 7 ist immer einzigartig. Jedoch können die Schweißaufgaben zum Herstellen einer Schweißverbindung wiederverwendet werden, um eine andere Schweißverbindung 7 herzustellen.

In den Schweißverbindungsdaten 1311 bis 1317 ist ein Parameter für eine Schweißverbindung 7 vorgesehen, der in seinen Daten eine globale, steuerungsübergreifend eindeutige Beschreibung einer Schweißaufgabe umfasst, die eindeutig einer Position an einem mit der industriellen Anlage 1 zu fertigenden Produkt oder Gegenstand zuordenbar ist.

In den Schweißverbindungsdaten 1311 bis 1317 ist zudem ein Parameter einer Schweißaufgabe vorgesehen. Der Parameter einer Schweißaufgabe gibt eine Parametrierung gleichartiger Schweißaufgaben, wie beispielsweise Blechdickenkombinationen mit gleichen Randbedingungen, wie z.B. Nebenschlüsse, Klebstoff an der Position der vorzunehmenden Schweißverbindung, usw. wieder. Somit umfasst der Parameter der mit der Schweißsteuerung 11 auszuführenden Schweißaufgabe Informationen zu Verbindungen mit gleicher Blechdicken-/Materialkombination unabhängig von der Position am mit der industriellen Anlage 1 zu fertigenden Produkt unter Berücksichtigung von Randbedingungen bei der Position der auszuführenden Schweißaufgabe.

Zusätzlich kann in den Schweißverbindungdaten 1311 bis 1317 ein Parameter einer Kombination von Werkstücken 5, 6 gespeichert sein, der insbesondere eine Parametrierung eines Strom- und Kraftprofils für eine bestimmte Blechdickenkombination und/oder für Sonderaufgaben, wie Vorbehandlung oder Vorkonditionierung, Nachbehandlung, usw. aufweist. Zusätzlich oder alternativ können Angaben in Bezug auf eine Materialkombination der Werkstücke 5, 6 und/oder eine Beschaffenheit der Werkstücke 5, 6 an ihrer Oberfläche vorhanden sein.

Die erste Kommunikationseinrichtung 15 verbindet die erste Bedienvorrichtung 16 und die Schweißsteuerungen 11 bis 13 der ersten Bearbeitungslinie 10. Die zweite Kommunikationseinrichtung 25 verbindet die zweite Bedienvorrichtung 26 und die Schweißsteuerungen 21 bis 24 der zweiten Bearbeitungslinie 20. Darüber hinaus sind die Kommunikationseinrichtungen 15, 25 verbunden. Dadurch ist ein Kommunikationsnetzwerk gebildet, in welchem zwischen den Komponenten der Bearbeitungslinien 10, 20 die Daten 131, 1311 bis 1317 je nach Bedarf austauschbar sind. In Fig. 1 ist nur ein sehr spezielles Beispiel für den Austausch von Daten 131, 1311 bis 1317 dargestellt.

Die genannten Verbindungen des Kommunikationsnetzwerks können drahtlos oder drahtgebunden ausgeführt sein. Hierbei ist optional mindestens eine der genannten Verbindungen drahtlos ausgeführt. Optional ist mindestens eine der genannten Verbindungen drahtgebunden ausgeführt. Denkbar ist, dass nur eine der Bedienvorrichtungen 16, 26 vorhanden ist.

Die erste und zweite Kommunikationseinrichtung 15, 25 können jeweils als Gateway oder Kommunikationsserver ausgeführt sein. Die Kommunikationseinrichtungen 15, 25 agieren jeweils als Client in Bezug auf eine angeschlossene Schweißsteuerung 11 bis 13, 21 bis 24. Die Kommunikationseinrichtung 15 initiiert eine Kommunikation mit einer der Schweißsteuerungen 11 bis 13, beispielsweise der Schweißsteuerung 11. Danach kann ein beliebiger Austausch von Leseanforderungen, Schreibanforderungen, usw. oder Statusmeldungen zwischen der Kommunikationseinrichtung 15 und der Schweißsteuerung 11 bei dem genannten Beispiel erfolgen. Die Kommunikationseinrichtung 25 initiiert eine Kommunikation mit einer daran angeschlossenen Schweißsteuerung 21 bis 24, beispielsweise der Schweißsteuerung 23. Danach kann ein beliebiger Austausch von Leseanforderungen, Schreibanforderungen, usw. oder Statusmeldungen zwischen der Kommunikationseinrichtung 25 und der Schweißsteuerung 23 bei dem genannten Beispiel erfolgen.

Die Bedienvorrichtungen 16, 26 sind als allgemeine Benutzerschnittstelle ausgeführt. Insbesondere sind die Bedienvorrichtungen 16, 26 als Vorrichtung mit Anzeige- und Eingabefunktion ausgestaltet, so dass ein Benutzer 8 der industriellen Anlage 1 und/oder der Schweißanlage 2 die Anlagen 1, 2 oder zumindest die Schweißanlage 2 bedienen kann. Die Bedienvorrichtungen 16, 26 sind gleich oder unterschiedlich ausgestaltbar.

Die erste und zweite Kommunikationseinrichtung 15, 25 sind jeweils vorkonfiguriert, um sich mit einer Gruppe von Steuereinrichtungen zu verbinden, wie in Fig. 1 gezeigt. Die Bedienvorrichtungen 16, 26 sind derart konfiguriert, dass sie sich jeweils mit der richtigen Kommunikationseinrichtung 15, 25 verbinden, wenn sie auf Daten 131, 1311 bis 1317 von einer der Steuereinrichtungen 11 bis 13, 21 bis 24, 31, 32 zugreifen soll.

Wie in Fig. 1 dargestellt, ist die Bearbeitungslinie 30 zumindest zeitweise nicht mit den Bearbeitungslinien 10, 20 verbunden. Dadurch ist der Austausch von Schweißverbindungsdaten 1311 bis 1317 oder Daten 131 zwischen der Bearbeitungslinie 30 und den übrigen Komponenten der Schweißanlage 2 nicht über das zuvor beschriebene Kommunikationsnetzwerk möglich. Dasselbe gilt für sonstige Daten, die im Betrieb einer Schweißsteuerung verwendet werden, wie beispielsweise der Schweißsteuerung 11, wie mit Fig. 2 und der nachfolgenden Beschreibung erläutert.

Fig. 2 zeigt eine Schweißzelle der Schweißanlage 2 genauer, in welcher die Schweißsteuerung 11 verwendet wird. Die Schweißzelle der Schweißanlage 2 für die Schweißsteuerungen 12, 13, 21 bis 24, 31, 32 sind in ähnlicher Weise aufgebaut, so dass die folgende Beschreibung allgemein für die Schweißsteuerungen 11 bis 13, 21 bis 24, 31, 32 gültig ist.

Im Betrieb der Schweißanlage 2 steuert die Schweißsteuerung 11 mindestens ein Schweißwerkzeug 41 an, so dass mindestens eine Schweißverbindung 7 herstellbar ist. Insbesondere kann jedoch eine Schweißverbindung 7 alternativ nur an einem Werkstück 5 hergestellt werden, indem zwei Ränder des Werkstücks 5 mit der Schweißverbindung 7 miteinander verbunden werden. Die Werkstücke 5, 6 sind aus einem beliebigen schweißbaren Material, beispielsweise Stahl, Aluminium, Legierungen davon, usw. auswählbar. Hierbei sind beliebige Kombinationen von Materialien möglich.

Die Schweißzelle der Schweißanlage 2 hat unter anderem die Schweißsteuerung 11, eine Kommunikationseinrichtung 15, eine Bedienvorrichtung 16 eine Vorrichtung 40 zum Führen eines Schweißwerkzeugs 41, ein Frontend bzw. eine Erfassungseinrichtung 50. Zudem kann die Schweißsteuerung 11 entweder direkt oder über die Kommunikationseinrichtung 15 mit einer übergeordneten Steuervorrichtung verbunden sein, welche die Schweißanlage 2 und/oder andere nicht dargestellte Komponenten der industriellen Anlage 1 steuern kann. Derartige Komponenten sind beispielsweise eine Transporteinrichtung zum Transportieren von insbesondere mindestens einem der Werkstücke 5, 6, eine oder mehrere weitere Schweißanlage(n), ein oder mehrere sonstige Werkzeug(e), wie beispielsweise ein Schraubwerkzeug, ein Nietwerkzeug, ein Bohrwerkzeug, ein Stanzwerkzeug, usw.

Die Schweißanlage 2 ist insbesondere eine Widerstandsschweißanlage. In diesem Fall ist das Schweißwerkzeug 41 insbesondere ein Widerstandsschweißwerkzeug. Hierbei werden die zu verschweißenden Materialien oder wird die zu verschweißende Materialkombination mittels einer vorbestimmten Zangenkraft vorgespannt, wobei der notwendige Schweißstrom für eine definierte Zeit an eine Position an dem mindestens einen Werkstück 5, 6 gebracht wird, um mindestens eine Schweißverbindung 7, insbesondere einen Schweißpunkt, herzustellen.

Die Schweißsteuerung 11 umfasst ein Leistungsteil 111, das auch Umrichter genannt wird, eine Schnittstelle 110, eine Steuereinrichtung 112, eine Speichereinrichtung 113 zur Speicherung von Daten 51, 131 bis 133, eine Kommunikationseinrichtung 114, eine Überwachungseinrichtung 115 sowie ein Gehäuse 116. Das Gehäuse 116 ist insbesondere ein Schaltschrank, in welchen die Schweißsteuerung 11 eingebaut ist. Zum Abführen von Wärme aus dem Gehäuse 116 der Schweißsteuerung 11 ist bei Bedarf eine nicht dargestellte Kühleinrichtung vorgesehen. Das Leistungsteil 111 bzw. der Umrichter ist vorzugsweise in die Schweißsteuerung 11 integriert, kann jedoch alternativ separat von der Schweißsteuerung 11 vorgesehen sein.

Die Vorrichtung 40 von Fig. 1 kann insbesondere ein Schweißroboter sein. Die Vorrichtung 40 bewegt das Schweißwerkzeug 41 zu einer Fügestelle an dem mindestens einen Werkstück 5, 6. Außerdem hält oder bewegt die Vorrichtung 40 das Schweißwerkzeug 41 an der Fügestelle entsprechend, um mit dem Schweißwerkzeug 41 beispielsweise einen Schweißpunkt und/oder eine Schweißnaht als Schweißverbindung 7 herzustellen. Das Schweißwerkzeug 41 ist beispielsweise eine Schweißzange mit mindestens zwei Schweißelektroden 411, 412, die jeweils an ihrem freien Ende mit einer Schweißelektrodenkappe ausgestattet sind.

Das Frontend bzw. die Erfassungseinrichtung 50 sind Teil(e) des Schweißwerkzeugs 41, insbesondere Teil(e) einer Schweißzange.

Gemäß Fig. 1 wird das Schweißwerkzeug 41 über einen Umrichter bzw. das Leistungsteil 111 und einen Schweißtransformator 43, an den ein Gleichrichter 44 angebaut ist, mit einem elektrischen Strom zum Schweißen versorgt, dem sogenannten Schweißstrom I. Hierfür wird das Leistungsteil 111 von einem dreiphasigen Spannungsnetz mit Netzphasen N1, N2, N3 mit einer elektrischen Spannung U versorgt. Insbesondere wird das Leistungsteil 111 mit einem Dreiphasenwechselstrom mit einer Frequenz von 50 Hz und einer Spannung von 400V oder 690V betrieben und versorgt den Schweißtransformator 43 primärseitig. Der Gleichrichter 44 dient zum sekundärseitigen Gleichrichten des Dreiphasenwechselstroms. Daher ist der Gleichrichter 44 mit dem Ausgang des Schweißtransformators 43 verbunden. Der Schweißtransformator 43 führt dem Schweißwerkzeug 41 mit Hilfe des Gleichrichters 44 somit einen Gleichstrom als Schweißstrom I zu. Der Schweißtransformator 43 ist beispielsweise als Mittelfrequenz-Schweißtransformator ausgeführt.

Die Schweißsteuerung 11 regelt den Schweißstrom I, der vom Schweißwerkzeug 41 beim Herstellen einer Schweißverbindung 7 geliefert wird. Hierbei arbeitet die Schweißsteuerung 11 je nach Einstellung mit verschiedenen Regelverfahren. Beispiele hierfür sind ein Regelverfahren, das einen konstanten Schweißstrom I garantiert (Konstant-Strom-Regelverfahren (KSR)) oder ein adaptives Strom-Regelverfahren (ASR) das den Schweißstrom I an die aktuellen Prozessgegebenheiten am Schweißpunkt automatisch anpasst. Die genannten Regelverfahren KSR und ASR sorgen für eine verbesserte und stabilere Schweißqualität.

Beim Führen des Schweißwerkzeugs 41 mit einem Arm 45 der Vorrichtung 40 wird die Vorrichtung 40 von ihrer Steuereinrichtung 46 gesteuert, die auch als Robotersteuerung bezeichnet wird. Hierfür ist die Steuereinrichtung 46 mit der Schweißsteuerung 11 über eine Kommunikationseinrichtung 47 mit Hilfe mindestens einer Verbindungsleitung 49 verbunden. Über die Verbindungsleitung(en) 49 sind relevante Daten für die Durchführung eines Schweißvorgangs mit dem Schweißwerkzeug 41 zwischen der Schweißsteuerung 11 und der Vorrichtung 40, genauer gesagt der Steuereinrichtung 46, austauschbar. Zudem können Parameter der Steuereinrichtung 46, mit welchen das Schweißwerkzeug 41 gesteuert wird, in der Speichereinrichtung 113 gespeicherte interne Grundparameter oder Sollwerte 131, insbesondere die Schweißverbindungsdaten 1310, sein. Es sind beliebige andere interne Grundparameter und/oder Sollwerte 131 denkbar.

Die Schweißsteuerung 11 muss nicht über die Leitung(en) 49 mittelbar über den beschriebenen Kommunikationspfad kommunizieren. Stattdessen sind am Schweißwerkzeug 41 empfangene Daten, wie beispielsweise Erfassungsdaten 51, für die Steuereinrichtung 46 auskoppelbar und an die Steuereinrichtung 46 optional mittels mindestens einer an der Vorrichtung 40 angeordneten Leitung 461 übermittelbar. In diesem Fall können die Leitung(en) 49 entfallen oder aus Redundanzgründen zusätzlich zu der Leitung 461 vorhanden sein. Dadurch übermittelt die Schweißsteuerung 11 an die Steuereinrichtung 46 Daten bezüglich der von der Vorrichtung 40 mit dem Schweißwerkzeug 41 auszuführenden Schweißaufgabe.

Die Erfassungseinrichtung 50 erfasst im Betrieb der Schweißanlage 2 die Erfassungsdaten 51, die über eine Verbindungsleitung 52 an die Schweißsteuerung 11 übertragen und in der Speichereinrichtung 13 gespeichert werden. Die Erfassungsdaten 51 ergeben sich aufgrund einer kontinuierlichen Erfassung von Daten des Schweißwerkzeugs 41 und/oder des Schweißtransformators 43 und/oder des Gleichrichters 44 und/oder des mindestens einen Werkstücks 5, 6. Hierbei kann die Erfassung beim Herstellen einer Schweißverbindung 7 entweder ununterbrochen oder mit einer vorbestimmten Abtastrate erfolgen. Die vorbestimmte Abtastrate ist bei dem vorliegenden Ausführungsbeispiel derart gewählt, dass sich eine annähernd kontinuierliche Erfassung des Schweißverlaufs bei dem Herstellen der Schweißverbindung 7 vorzugsweise in Echtzeit ergibt.

Die Übertragung der Erfassungsdaten 41 des Schweißwerkzeugs 41 und/oder des Schweißtransformators 43 und/oder des Gleichrichters 44 und/oder des mindestens einen Werkstücks 5, 6 zwischen dem Schweißwerkzeug 41 und der Schweißsteuerung 11 und/oder der Steuereinrichtung 46 erfolgt mit Hilfe einer Frontend-Schnittstelle 42 und der Schweißsteuerung-Schnittstelle 110.

Die Erfassungsdaten 51 werden von der Steuereinrichtung 12 verwendet. Zusätzlich sind die Erfassungsdaten 51 mit der Bedienvorrichtung 16 anzeigbar. Hierfür sind die Steuereinrichtung 112 und die Bedienvorrichtung 16 beispielsweise über eine RS232-Schnittstelle oder eine USB-Schnittstelle oder über eine Feldbus-Schnittstelle bzw. einen Feldbus miteinander verbunden. Als Feldbus ist insbesondere Sercos, EtherCAt, ProfiNet, und dergleichen wählbar. Dadurch sind die Daten in Echtzeit zwischen der Steuereinrichtung 112 und der Bedienvorrichtung 16 übertragbar. Unter Echtzeit wird der Betrieb eines Rechensystems verstanden, bei dem Programme zur Verarbeitung anfallender Daten ständig betriebsbereit sind, derart, dass die Verarbeitungsergebnisse innerhalb einer vorgegebenen Zeitspanne verfügbar sind, so dass in diesem Falle ein Schweißprozess reibungslos ausgeführt werden kann. Die Daten können je nach Anwendungsfall nach einer zeitlich zufälligen Verteilung oder zu vorherbestimmten Zeitpunkten anfallen.

Zudem sind über die Bedienvorrichtung 16 Hinweise für den Benutzer 8 in Bezug auf den Status der Schweißanlage 2 und/oder einer ihrer zuvor genannten Komponenten ausgebbar. Der Status der Schweißanlage 2 umfasst unter anderem mindestens eine Fehlermeldung 161 über einen Fehler, der im Betrieb der Schweißanlage 2 gegebenenfalls auftritt. Zudem sind die Erfassungsdaten 51 und/oder die Schweißverbindungsdaten 1311 als Betriebsanzeige 162 mit der Bedienvorrichtung 16 anzeigbar. Die Bedienvorrichtung 16 ist beispielsweise eine Tastatur und/oder eine Maus, ein Laptop, ein berührungsempfindlicher oder berührungsunempfindlicher Bildschirm, usw. oder deren Kombinationen. Die mindestens eine Bedienvorrichtung 16 kommt zudem insbesondere zur Bedienung der Schweißanlage 2 und zur Parametrierung der Elektrodenpflege des Schweißwerkzeugs 41 und Nachstellung zum Einsatz.

Die Überwachungseinrichtung 115 verwendet die Daten 51, 131, um auszuwerten, ob die Steuerung der Schweißanlage 2 zu den gewünschten Ergebnissen führt oder nicht. In Echtzeit wird das Ergebnis der Überwachung erlangt und als Daten 132 in der Speichereinrichtung 113 gespeichert und/oder mit der Bedienvorrichtung 16 angezeigt.

Die Steuereinrichtung 112 kann auf die Speichereinrichtung 113 zugreifen und Daten 133 in der Speichereinrichtung 113 speichern oder Daten 51, 131 bis 133 aus ihr abrufen. Die Steuereinrichtung 112 speichert als Daten 133 beispielsweise die jeweils von der Steuereinrichtung 112 vorgegebenen Betriebsdaten, wie den Phasenanschnitt des Schweißstroms I und einen Widerstand R des Schweißwerkzeugs 41 beim Ausführen einer Schweißung oder dem Herstellen einer Schweißverbindung 7. Es sind beliebige andere vorgegebene Betriebsdaten denkbar. Zudem kann ein Parameter mit Daten zu einem des mindestens einen Schweißwerkzeugs 41 gespeichert sein, wie Schweißwerkzeug-Name, Schweißwerkzeug-Typ, maximaler Elektrodenverschleiß, maximaler Anzahl der Frässchritte, maximaler Schweißwerkzeugverschleiß, Nummer der Nachstellkurve, Schweißwerkzeug-Antriebsparameter, Schweißtransformator-Typ, Ist-Elektrodenverschleiß, Anzahl der Frässchnitte, Ist-Schweißwerkzeugverschleiß, Ist-Schweißwerkzeugwiderstand, Antriebs-Istwerte, usw.

Beim Schweißen empfängt die Steuereinrichtung 112 und/oder die Speichereinrichtung 113 von dem Frontend bzw. der Erfassungseinrichtung 50 des Schweißwerkzeugs 41 die Erfassungsdaten 51 in Bezug auf Schweißungen, die mit dem Schweißwerkzeug 41 durchgeführt werden.

Die Steuereinrichtung 112 und/oder die Überwachungseinrichtung 115 vergleicht die Erfassungsdaten 51 mit einem Referenzschweißablauf, der in den Daten 131 für die von dem Schweißwerkzeug 41 zu verwendenden Elektrodenkappen und/oder Werkstücke 5, 6 bzw. Kombinationen von Werkstücken 5, 6 in den Daten 131 gespeichert ist. Demzufolge führt auch die Erfassungseinrichtung 50 im Betrieb der Schweißanlage 2 eine Erfassung derart aus, dass sich Erfassungsdaten 31 ergeben, die mit dem Referenzschweißablauf vergleichbar sind.

Ergibt der Vergleich, dass die Schweißqualität nicht die vorgegebenen Kriterien erfüllt, kann insbesondere ein Reinigungsvorgang für das Schweißwerkzeug 41 durchgeführt werden oder sonstige hier nicht genauer spezifizierte Maßnahmen durchgeführt werden.

Wie aus der Zusammenschau von Fig. 1 und Fig. 2 deutlich wird, ist somit eine Vielzahl von Daten 51, 131 bis 133, 1311 bis 1317 in den einzelnen Schweißsteuerungen 11 bis 13, 21 bis 24, 31, 32 gespeichert und zwischen den einzelnen Komponenten der Schweißanlage 2 austauschbar.

Bei der Inbetriebnahme (Start-Up) der jeweiligen Kommunikationseinrichtung 15, 25 beschaffen sich die Kommunikationseinrichtungen 15, 25 Daten von den jeweils angeschlossenen Steuereinrichtungen. Somit beschafft sich die Kommunikationseinrichtung 15 insbesondere alle Schweißverbindungsdaten 1311 bis 1313 von den Steuereinrichtungen 11 bis 13 und speichert diese in ihrem Speicher ab. Die Kommunikationseinrichtung 25 beschafft sich insbesondere alle Schweißverbindungsdaten 1314 bis 1317 von den Steuereinrichtungen 21 bis 24 und speichert diese in ihrem Speicher ab. Verbindet sich nun der Benutzer 8 von einer der Bedienungsvorrichtungen 16, 26 mit einer der Kommunikationseinrichtungen 15, 25, kann er alle Informationen über alle Schweißverbindungsdaten 1311 bis 1317 erhalten, die in den Schweißsteuerungen 11 bis 13, 21 bis 24 gespeichert sind. Ist eine der Schweißsteuerungen 11 bis 13, 21 bis 24 Offline, werden deren Schweißverbindungsdaten 1311 bis 1317 nicht angezeigt.

Der Benutzer 8 kann nun beliebig entscheiden, insbesondere je nach Bedarf, welche der Schweißverbindungsdaten 1311 bis 1317 von einer Quellen-Schweißsteuerung zu einer Ziel-Schweißsteuerung übertragen werden sollen. Ist die Ziel-Schweißsteuerung mit der zugehörigen Kommunikationseinrichtung 15, 25 verbunden, kann eine Online-Übertragung durchgeführt werden. Ist die Ziel-Schweißsteuerung mit der zugehörigen Kommunikationseinrichtung 15, 25 nicht verbunden, kann die Übertragung mit Hilfe einer Datei 151, 251 durchgeführt werden, welche die Kommunikationseinrichtung 15, 25 für die jeweilige Übertragungsaufgabe erstellt und abspeichert, wie in Fig. 1 dargestellt. Die Datei 151, 251 kann von der Ziel-Schweißsteuerung je nach Bedarf zu beliebiger Zeit abgeholt werden. Die Datei 151, 251 ist insbesondere eine xml-Datei.

Für die Übertragung der Schweißverbindungsdaten 1311 bis 1317 sind an der von dem Benutzer 8 gewünschten Bedienvorrichtung 16, 26 folgende Informationen einzugeben:
- welche Schweißverbindungsdaten 1311 bis 1317 der Benutzer 8 übertragen oder kopieren oder löschen möchte,
- einen Namen für den Ziel-Schweißverbindungsdatensatz,
- die Ziel-Schweißsteuerung,
- die Ziel-Schweißaufgabe, mit welcher die Schweißverbindung 7 mit den zu übertragenden Schweißverbindungsdaten 1311 bis 1317 unter Steuerung durch die Ziel-Schweißsteuerung herzustellen ist, und
- das Ziel-Schweißwerkzeug 41, mit welchem die Ziel-Schweißaufgabe durchgeführt werden soll.

Ein Teil der zuvor genannten Informationen können dem Benutzer 8 mit der Bedienvorrichtung 16, 26 in einer Liste 165, 265 dargestellt werden, die alle verfügbaren Daten an der Ziel-Schweißsteuerung anzeigt. Somit kann der Benutzer 8 beispielsweise aus einer Liste aller Schweißaufgaben an der Ziel-Schweißsteuerung die Ziel-Schweißaufgabe auswählen. Der Fortschritt und damit der Status des Vorgangs für die Übertragung kann dem Benutzer 8 mit der entsprechenden Bedienvorrichtung 16, 26 angezeigt werden, wie zuvor beschrieben.

Die entsprechende Kommunikationseinrichtung 15, 25 erzeugt nach Empfang dieser Informationen die Datei 151, 251, welche die Details der zuvor genannten Übertragungsanforderung enthält. Die Datei 151, 251 kann in dem Speicher der entsprechenden Kommunikationseinrichtung 15, 25 gespeichert werden. Zusätzlich oder alternativ kann die Datei 151, 251 in einem Speicher gespeichert werden, der lokal an die Bedienvorrichtung 16, 26 angeschlossen ist, von welcher der Benutzer 8 die Übertragungsanforderung eingibt.

Für die Übertragung der Schweißverbindungsdaten 1311 bis 1317 auf die Ziel-Schweißsteuerung wird die Datei 151, 251 anschließend geparst, also mit einem Parser, der als Computerprogramm ausgeführt ist, analysiert und zerteilt, und die Übertragungsanforderung wird an die entsprechenden Schweißsteuerungen, nämlich die Quellen-Schweißsteuerung und die Ziel-Schweißsteuerung gegeben, um die Übertragung gemäß der Übertragungsanforderung auszuführen. Der Parser gibt die Analyse der Datei 151, 251 in einer gewünschten Form, insbesondere als getrennte Informationen für die Quellen-Schweißsteuerung und die Ziel-Schweißsteuerung, aus und erzeugt zusätzlich Strukturbeschreibung(en) für die Informationen.

Die Strukturbeschreibung ist ein binäres Kommando, was der Quellen-Schweißsteuerung (Quelle-SST) eindeutig mitteilt, welcher Datensatz 1311 bis 1317 zu kopieren oder zu löschen ist bzw. welche Schweißverbindungsdaten 1311 bis 1317 zu kopieren oder zu löschen sind, und der Ziel-Schweißsteuerung (Ziel-SST) eindeutig mitteilt, welcher Datensatz 1311 bis 1317 zu erzeugen/überschreiben ist bzw. welche Schweißverbindungsdaten 1311 bis 1317 zu erzeugen/überschreiben sind. Sind nach der Datenübertragung zwei Schweißverbindungsdaten 1311 bis 1317 mit dem gleichen Namen vorhanden, so wird der Konflikt automatisch von der Ziel-Schweißsteuerung gelöst, beispielsweise durch Überschreiben des vorhandenen Datensatzes 1311 bis 1317bzw. der vorhandenen Schweißverbindungsdaten 1311 bis 1317.

Ist die Ziel-Schweißsteuerung derzeit nicht verfügbar, beispielsweise ausgeschaltet oder vom Kommunikationsnetzwerk getrennt, kann die Übertragung später ausgeführt werden, und zwar dann wenn die Ziel-Schweißsteuerung wieder verfügbar ist.

Die Übertragung kann hierbei nicht nur über das Kommunikationsnetzwerk zwischen den Kommunikationseinrichtungen 15, 25 und den Bedienvorrichtungen 16, 26 erfolgen, sondern alternativ über ein externes Speichermedium, insbesondere einen Speicherstick, auf welchen die Datei 151, 251 von der jeweiligen Kommunikationseinrichtung 15, 25 gespeichert wurde. Hierbei kann ein entsprechendes Hilfsprogramm ablaufen, welches die Übertragung für den Benutzer 8 weiter vereinfacht. Dadurch ist die Datei 151, 251 auch für die dritte Bearbeitungslinie 30, genauer gesagt deren Schweißsteuerungen 31, 32 verwendbar. In einem solchen Fall, bei welchem beispielsweise ein Datensatz der Schweißverbindungsdaten 1311 bis 1317 zu der Schweißsteuerung 31 übertragen werden soll, die von den Schweißsteuerungen 11 bis 13, 21 bis 24 als Quellen-Schweißsteuerung nicht erreichbar ist, wird die generierte Datei 151, 251 verwendet, die insbesondere eine xml-Datei ist. In dieser Datei 151, 251 steht mindestens der benötigte, jedoch insbesondere der komplette, Datensatz der Quellen-Schweißsteuerung zur Verfügung. Wird diese Datei 151, 251 in die Ziel-Schweißsteuerung übertragen, kennt die Ziel-Schweißsteuerung ganz genau die Details für die Übertragung und muss hierfür nicht die Quellen-Schweißsteuerung anfragen.

Gemäß einem ersten Beispiel erstellt die Kommunikationseinrichtung 15 nach einer entsprechenden Übertragungsanforderung des Benutzers 3 eine Datei 151_1, um eine Übertragung von Schweißverbindungsdaten 1311 von der Schweißsteuerung 11 als Quellen-Schweißsteuerung auf die Schweißsteuerung 13 als Ziel-Schweißsteuerung durchzuführen. Alternativ kann die Übertragung der Schweißverbindungsdaten 1311 von der Schweißsteuerung 11 auf die Schweißsteuerung 13 direkt Online erfolgen, da die Schweißsteuerungen 11, 13 über die Kommunikationseinrichtung 15 verbunden sind.

Gemäß einem zweiten Beispiel erstellt die Kommunikationseinrichtung 15 nach einer entsprechenden Übertragungsanforderung des Benutzers 8 eine Datei 151_2, um eine Übertragung von Schweißverbindungsdaten 1311 von der Schweißsteuerung 11 als Quellen-Schweißsteuerung auf die Schweißsteuerung 15 als Ziel-Schweißsteuerung durchzuführen.

Zum Ausführen der Befehle in der Datei 151, 251, 151_1, 151_2, interpretiert ein Befehlsinterpreter auf der Seite der Schweißsteuerungen 11 bis 13, 21 bis 24, 31, 32 in dem Datenmanager die Befehl(e). Der Befehlsinterpreter kann insbesondere in der Steuereinrichtung 112 vorgesehen sein. Der einzelne Befehl ist im Grunde genommen eine serielle Nachricht eines Protokollpuffers, welche die Kommunikationseinrichtungen 15, 25 zu dem Datenmanager sendet, wo der Befehl deserialisiert und interpretiert wird. Die Einzelheiten zum Übertragen der Schweißverbindungsdaten 1311 bis 1317, wie zuvor erwähnt, sind in der Datei 151, 251, 151_1, 151_2 verpackt und mittels FTP (File Transfer Protocol = Dateiübertragungsprotokoll) an die Ziel-Schweißsteuerung und die Quellen-Schweißsteuerung gesendet. Danach gibt die entsprechende Kommunikationseinrichtung 15, 25 an die jeweilige(n) Schweißsteuerung(en) einen Befehl aus, um die Übertragung auf der Grundlage der Informationen in der Datei 151, 251 auszuführen. Die Schweißsteuerung(en) entfernt/entfernen die Datei 151, 251, 151_1, 151_2 von dem FTP-Pfad und führt/führen die Übertragung der vorgegebenen Schweißverbindungsdaten 1311 bis 1317 aus.

Die Schweißanlage 2 hat somit eine Architektur, bei welcher Datensätze, genauer gesagt die Schweißverbindungsdaten 1311 bis 1317, für Schweißverbindungen 7 mindestens zweier Schweißsteuerungen 11 bis 13, 21 bis 42, 31, 32 zentral verwaltet werden, nämlich mit den Kommunikationseinrichtungen 15, 25. Die Parameterstruktur der Datensätze ist zweigeteilt hierarchisch (Schweißverbindung 7 und Schweißaufgabe) aufgebaut, wie zuvor beschrieben. Hierbei wird ein Aufschalten der Bedienvorrichtung (GUI) 16, 26, insbesondere der Kommunikationseinrichtung 15, 25, auf die Schweißsteuerungen 11 bis 13, 21 bis 42, 31, 32 durchgeführt. Zudem werden die Schweißverbindungsdaten 1311 bis 1317 von den Kommunikationseinrichtungen 15, 25 zentral verwaltet. Hieraus können die Schweißverbindungsdaten 1311 bis 1317 mit Schweißverbindung 7 und Schweißaufgabe zum Löschen, Kopieren oder Verschieben mit Angabe von Quell- und Ziel-Schweißsteuerung ausgewählt werden.

Vorteilhaft ist, wenn der Zugriff auf die Kommunikationseinrichtungen 15, 25 von einer berechtigten Bedienvorrichtung (GUI) 16, 26 und/oder einem berechtigten Benutzer 8 an der Bedienvorrichtung (GUI) 16, 26 aus erfolgt.

Auf diese Weise kann die Datenübertragung und -Verwaltung zum Herstellen von Schweißverbindungen 7 in der Schweißanlage 2 deutlich vereinfacht und dynamisiert werden.

Gemäß einem zweiten Ausführungsbeispiel erstellt mindestens eine der Kommunikationseinrichtungen 15, 25 bei der Übertragungsanforderung mehr als eine Datei 151, 251. Dadurch können die Informationen der Datei 151, 251 bereits zumindest teilweise aufgeteilt werden.

Ansonsten ist die Schweißanlage 2 gemäß dem vorliegenden Ausführungsbeispiel aufgebaut, wie in Bezug auf die Schweißanlage 2 gemäß dem ersten Ausführungsbeispiel beschrieben.

Alle zuvor beschriebenen Ausgestaltungen der Schweißanlage 2 und des von ihr ausgeführten Verfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die industrielle Anlage 1 weist möglicherweise anstelle des von der Vorrichtung 40 geführten Schweißwerkzeugs 41 ein Handwerkzeug auf. Die Vorrichtung 40 kann alternativ derart ausgestaltet sein, dass das Schweißwerkzeug 41 ein handgeführtes Werkzeug ist. Zusätzlich zu einer der genannten Ausführungsvarianten für das Schweißwerkzeug 41 ist es denkbar, dass die industrielle Anlage 1 mindestens ein weiteres Werkzeug aufweist, wie ein Schraub-, Bohr- oder Fräswerkzeug, oder Nietwerkzeug oder Schneidwerkzeug oder Toxwerkzeug oder Stanzwerkzeug.

## Patentansprüche

1. Schweißanlage (2) zum Herstellen einer Schweißverbindung (7), mit mindestens zwei Schweißsteuerungen (11 bis 13; 21 bis 24; 31, 32), die jeweils zum Speichern von Schweißverbindungsdaten (1311 bis 1317) zum Herstellen der Schweißverbindung (7) ausgestaltet sind, mindestens einem Schweißwerkzeug (41) zur Herstellung einer Schweißverbindung (7) an mindestens einem Werkstück (5; 5, 6) unter Steuerung einer der mindestens zwei Schweißsteuerungen (11 bis 13; 21 bis 24; 31, 32) auf der Grundlage der gespeicherten Schweißverbindungsdaten (1311 bis 1317),
einer Kommunikationseinrichtung (15; 25) zur Kommunikation mit den mindestens zwei Schweißsteuerungen (11 bis 13; 21 bis 24; 31, 32),
**dadurch gekennzeichnet, dass**
die Kommunikationseinrichtung (15; 25) ausgestaltet ist, sich bei deren Inbetriebnahme alle Schweißverbindungsdaten (1311 bis 1317) von den Steuereinrichtungen (11 bis 13) zu beschaffen und diese in ihrem Speicher abzuspeichern,
und einer Bedienvorrichtung (16, 26) die mit der Kommunikationseinrichtung (15; 25) verbunden ist,
wobei ein Benutzer (8), der sich von der Bedienungsvorrichtung (16, 26) mit der Kommunikationseinrichtung (15, 25) verbindet, alle Informationen über alle Schweißverbindungsdaten (1311 bis 1317) erhalten kann, die auf der Kommunikationseinrichtung (15; 25) gespeichert sind, und beliebig entscheiden kann, insbesondere je nach Bedarf, welche der Schweißverbindungsdaten **(1311** bis **1317)** von einer Quellen-Schweißsteuerung (11) der mindestens zwei Schweißsteuerungen (11 bis 13; 21 bis 24; 31, 32) auf eine Ziel-Schweißsteuerung (12, 13; 21 bis 24; 31, 32) der mindestens zwei Schweißsteuerungen (11 bis 13; 21 bis 24; 31, 32) übertragen werden sollen, wobei die Kommunikationseinrichtung (15; 25) ausgestaltet ist, die Übertragung zu initiieren.

2. Schweißanlage (2) nach Anspruch 1, wobei die Kommunikationseinrichtung (15; 25) zur Kommunikation mit den mindestens zwei Schweißsteuerungen (11 bis 13; 21 bis 24; 31, 32) als Client agiert und die mindestens zwei Schweißsteuerungen (11 bis 13; 21 bis 24; 31, 32) jeweils als Server agieren.

3. Schweißanlage (2) nach einem der vorangehenden Ansprüche, wobei die Kommunikationseinrichtung (15; 25) ausgestaltet ist, für die Übertragung der Schweißverbindungsdaten (1311 bis 1317) von einem Benutzer (8) abzufragen, ob die Schweißverbindungsdaten (1311 bis 1317) von der Quellen-Schweißsteuerung (11) auf die Ziel-Schweißsteuerung (12, 13; 21 bis 24; 31, 32) kopiert werden sollen oder aufgrund der Übertragung auf der Quellen-Schweißsteuerung (11) gelöscht werden sollen.

4. Schweißanlage (2) nach einem der vorangehenden Ansprüche, wobei die Kommunikationseinrichtung (15; 25) ausgestaltet ist, für die Übertragung der Schweißverbindungsdaten (1311 bis 1317) von einem Benutzer (8) einen Namen für den Ziel-Schweißverbindungsdatensatz, die Ziel-Schweißsteuerung, die Ziel-Schweißaufgabe, mit welcher die Schweißverbindung (7) mit den zu übertragenden Schweißverbindungsdaten (1311 bis 1317) unter Steuerung durch die Ziel-Schweißsteuerung herzustellen ist, und das Ziel-Schweißwerkzeug abzufragen, mit welchem die Ziel-Schweißaufgabe durchgeführt werden soll.

5. Schweißanlage (2) nach Anspruch 3 oder 4, wobei die Bedienvorrichtung (16; 26) auch zur Ausgabe der Abfragen und/oder von Statusmeldungen über die Übertragung an den Benutzer (8) dient.

6. Schweißanlage (2) nach einem der vorangehenden Ansprüche, wobei die Kommunikationseinrichtung (15; 25) ausgestaltet ist, mindestens eine Datei (151; 251) zur Kommunikation mit den mindestens zwei Schweißsteuerungen (11 bis 13; 21 bis 24; 31, 32) zu erzeugen, wenn die Ziel-Schweißsteuerung beim Programmieren der Übertragung zwischen Quellen-Schweißsteuerung und Ziel-Schweißsteuerung nicht verfügbar ist.

7. Schweißanlage (2) nach Anspruch 6, wobei die mindestens eine Datei (151; 251) eine xml-Datei ist.

8. Schweißanlage (2) nach Anspruch 6 oder 7, wobei die Quellen-Schweißsteuerung (11) und die Ziel-Schweißsteuerung (12, 13; 21 bis 24; 31, 32) zum Parsen der Informationen in der mindestens einen Datei (151; 251) ausgestaltet sind und ausgestaltet sind, die geparsten Informationen zu verwenden, die für die Schweißsteuerung (11 bis 13; 21 bis 24; 31, 32) für die Übertragung relevant sind.

9. Schweißanlage (2) nach einem der vorangehenden Ansprüche, wobei eine der Schweißsteuerungen (11 bis 13; 21 bis 24; 31, 32) ausgestaltet ist, auf der Grundlage der gespeicherten Schweißverbindungsdaten (1311 bis 1317) mindestens ein Schweißwerkzeug (41) anzusteuern.

10. Schweißanlage (2) nach einem der vorangehenden Ansprüche, zudem mit einer Vorrichtung (40), die einen Arm (45) zum Bewegen des Schweißwerkzeugs (41) im Raum und eine Steuereinrichtung (46) zur Steuerung des Arms (45) aufweist, wobei die Steuereinrichtung (46) der Vorrichtung (40) den mindestens zwei Schweißsteuerungen (11 bis 13; 21 bis 24; 31, 32) untergeordnet ist, und/oder einer Erfassungseinrichtung (50) zur Erfassung von Größen beim Herstellen einer Schweißverbindung (7) mit dem Schweißwerkzeug (41), wobei die mindestens zwei Schweißsteuerungen (11 bis 13; 21 bis 24; 31, 32) ausgestaltet sind, die erfassten Größen beim Steuern des Schweißwerkzeugs (41) zu berücksichtigen.

11. Schweißanlage (2) nach einem der vorangehenden Ansprüche, wobei eine Schweißsteuerung (11 bis 13; 21 bis 24; 31, 32) aufweist eine Steuereinrichtung (112) zur Steuerung des Schweißtransformators (43) und des Schweißwerkzeugs (41) der Schweißanlage (2), und eine Überwachungseinrichtung (115) zur Überwachung der Schweißqualität der mit dem Schweißwerkzeug (41) hergestellten Schweißverbindung (7) und Ausgabe einer Meldung (161) in Bezug auf das Überwachungsergebnis.

## Claims

1. Welding installation (2) for producing a welded connection (7), with at least two welding controllers (11 to 13; 21 to 24; 31, 32), which are each designed to store welding connection data (1311 to 1317) for producing the welded connection (7), at least one welding tool (41) for producing a welded connection (7) on at least one workpiece (5; 5, 6) under the control of one of the at least two welding controllers (11 to 13; 21 to 24; 31, 32) on the basis of the stored welding connection data (1311 to 1317), a communication device (15; 25) for communication with the at least two welding controllers (11 to 13; 21 to 24; 31, 32),
**characterized in that**
the communication device (15; 25) is designed to procure all welding connection data (1311 to 1317) from the control devices (11 to 13) upon its activation and to store them in its memory, and an operating device (16, 26) which is connected to the communication device (15; 25), wherein a user (8) who connects to the communication device (15, 25) from the operating device (16, 26) can receive all information about all welding connection data (1311 to 1317) which are stored on the communication device (15; 25) and can decide as desired, in particular depending on requirements, which of the welding connection data (1311 to 1317) should be transferred from a source welding controller (11) of the at least two welding controllers (11 to 13; 21 to 24; 31, 32) to a target welding controller (12, 13; 21 to 24; 31, 32) of the at least two welding controllers (11 to 13; 21 to 24; 31, 32), wherein the communication device (15; 25) is designed to initiate the transfer.

2. Welding installation (2) according to claim 1, wherein the communication device (15; 25) for communication with the at least two welding controllers (11 to 13; 21 to 24; 31, 32) acts as a client and the at least two welding controllers (11 to 13; 21 to 24; 31, 32) each act as a server.

3. Welding installation (2) according to one of the preceding claims, wherein the communication device (15; 25) is designed to query from a user (8), for the transfer of the welding connection data (1311 to 1317), whether the welding connection data (1311 to 1317) should be copied from the source welding controller (11) to the target welding controller (12, 13; 21 to 24; 31, 32) or should be deleted from the source welding controller (11) as a result of the transfer.

4. Welding installation (2) according to one of the preceding claims, wherein the communication device (15; 25) is designed, for the transfer of the welding connection data (1311 to 1317), to query from a user (8) a name for the target welding connection data set, the target welding controller, the target welding task with which the welded connection (7) is to be produced with the welding connection data (1311 to 1317) to be transferred under the control of the target welding controller, and to query the target welding tool with which the target welding task is to be carried out.

5. Welding installation (2) according to claim 2 or 3, wherein the operating device (16; 26) also serves to output the queries and/or status messages concerning the transfer to the user (8).

6. Welding installation (2) according to one of the preceding claims, wherein the communication device (15; 25) is designed to generate at least one file (151; 251) for communication with the at least two welding controllers (11 to 13; 21 to 24; 31, 32) if the target welding controller is not available when programming the transfer between the source welding controller and the target welding controller.

7. Welding installation (2) according to claim 6, wherein the at least one file (151; 251) is an xml file.

8. Welding installation (2) according to claim 6 or 7, wherein the source welding controller (11) and the target welding controller (12, 13; 21 to 24; 31, 32) are designed to parse the information in the at least one file (151; 251) and are designed to use the parsed information that is relevant for the transfer for the welding controller (11 to 13; 21 to 24; 31, 32).

9. Welding installation (2) according to one of the preceding claims, wherein one of the welding controllers (11 to 13; 21 to 24; 31, 32) is designed to control at least one welding tool (41) on the basis of the stored welding connection data (1311 to 1317).

10. Welding installation (2) according to one of the preceding claims, furthermore comprising a device (40) which has an arm (45) for moving the welding tool (41) in space and a control device (46) for controlling the arm (45), wherein the control device (46) of the device (40) is subordinate to the at least two welding controllers (11 to 13; 21 to 24; 31, 32), and/or a detection device (50) for detecting quantities when producing a welded connection (7) with the welding tool (41), wherein the at least two welding controllers (11 to 13; 21 to 24; 31, 32) are designed to take into account the detected quantities when controlling the welding tool (41).

11. Welding installation (2) according to one of the preceding claims, wherein a welding controller (11 to 13; 21 to 24; 31, 32) has a control device (112) for controlling the welding transformer (43) and the welding tool (41) of the welding installation (2), and a monitoring device (115) for monitoring the weld quality of the welded connection (7) produced with the welding tool (41) and for outputting a message (161) in relation to the monitoring result.

## Revendications

1. Installation de soudage (2) pour réaliser une liaison soudée (7), comportant au moins deux commandes de soudage (11 à 13 ; 21 à 24 ; 31, 32), qui sont respectivement agencées pour mémoriser des données de liaison soudée (1311 à 1317) pour la réalisation de la liaison soudée (7), au moins un outil de soudage (41) pour réaliser une liaison soudée (7) sur au moins une pièce (5 ; 5, 6) sous le contrôle de l'une des au moins two commandes de soudage (11 à 13 ; 21 à 24 ; 31, 32) sur la base des données de liaison soudée mémorisées (1311 à 1317), un dispositif de communication (15 ; 25) pour la communication avec les au moins deux commandes de soudage (11 à 13 ; 21 à 24 ; 31, 32),
**caractérisée en ce que**
le dispositif de communication (15 ; 25) est agencé pour, lors de sa mise en service, obtenir toutes les données de liaison soudée (1311 à 1317) des dispositifs de commande (11 à 13) et les mémoriser dans sa mémoire, et un dispositif de commande (16, 26) qui est connecté au dispositif de communication (15 ; 25), dans laquelle un utilisateur (8) qui se connecte au dispositif de communication (15, 25) depuis le dispositif de commande (16, 26) peut recevoir toutes les informations sur toutes les données de liaison soudée (1311 à 1317) qui sont mémorisées sur le dispositif de communication (15 ; 25), et peut décider librement, notamment en fonction des besoins, lesquelles des données de liaison soudée (1311 à 1317) doivent être transférées d'une commande de soudage source (11) des au moins deux commandes de soudage (11 à 13 ; 21 à 24 ; 31, 32) à une commande de soudage cible (12, 13 ; 21 à 24 ; 31, 32) des au moins two commandes de soudage (11 à 13 ; 21 à 24 ; 31, 32), le dispositif de communication (15 ; 25) étant agencé pour initier le transfert.

2. Installation de soudage (2) selon la revendication 1, dans laquelle le dispositif de communication (15; 25) pour la communication avec les au moins deux commandes de soudage (11 à 13 ; 21 à 24 ; 31, 32) agit en tant que client et les au moins deux commandes de soudage (11 à 13 ; 21 à 24 ; 31, 32) agissent respectivement en tant que serveur.

3. Installation de soudage (2) selon l'une des revendications précédentes, dans laquelle le dispositif de communication (15 ; 25) est agencé pour demander à un utilisateur (8), pour le transfert des données de liaison soudée (1311 à 1317), si les données de liaison soudée (1311 à 1317) doivent être copiées de la commande de soudage source (11) vers la commande de soudage cible (12, 13 ; 21 à 24 ; 31, 32) ou si elles doivent être supprimées sur la commande de soudage source (11) en raison du transfert.

4. Installation de soudage (2) selon l'une des revendications précédentes, dans laquelle le dispositif de communication (15 ; 25) est agencé, pour le transfert des données de liaison soudée (1311 à 1317), pour demander à un utilisateur (8) un nom pour l'ensemble de données de liaison soudée cible, la commande de soudage cible, la tâche de soudage cible avec laquelle la liaison soudée (7) doit être réalisée avec les données de liaison soudée à transférer (1311 à 1317) sous le contrôle de la commande de soudage cible, et l'outil de soudage cible avec lequel la tâche de soudage cible doit être effectuée.

5. Installation de soudage (2) selon la revendication 3 ou 4, dans laquelle le dispositif de commande (16 ; 26) sert également à l'émission des demandes et/ou de messages d'état sur le transfert à l'utilisateur (8).

6. Installation de soudage (2) selon l'une des revendications précédentes, dans laquelle le dispositif de communication (15 ; 25) est agencé pour créer au moins un fichier (151 ; 251) pour la communication avec les au moins deux commandes de soudage (11 à 13 ; 21 à 24 ; 31, 32) lorsque la commande de soudage cible n'est pas disponible lors de la programmation du transfert entre la commande de soudage source et la commande de soudage cible.

7. Installation de soudage (2) selon la revendication 6, dans laquelle le au moins un fichier (151 ; 251) est un fichier xml.

8. Installation de soudage (2) selon la revendication 6 ou 7, dans laquelle la commande de soudage source (11) et la commande de soudage cible (12, 13 ; 21 à 24 ; 31, 32) sont agencées pour analyser les informations dans le au moins un fichier (151 ; 251) et sont agencées pour utiliser les informations analysées qui sont pertinentes pour la commande de soudage (11 à 13 ; 21 à 24 ; 31, 32) pour le transfert.

9. Installation de soudage (2) selon l'une des revendications précédentes, dans laquelle l'une des commandes de soudage (11 à 13 ; 21 à 24 ; 31, 32) est agencée pour commander au moins un outil de soudage (41) sur la base des données de liaison soudée mémorisées (1311 à 1317).

10. Installation de soudage (2) selon l'une des revendications précédentes, comportant en outre un dispositif (40) qui présente un bras (45) pour déplacer l'outil de soudage (41) dans l'espace et un dispositif de commande (46) pour commander le bras (45), dans laquelle le dispositif de commande (46) du dispositif (40) est subordonné aux au moins deux commandes de soudage (11 à 13 ; 21 à 24 ; 31, 32), et/ou un dispositif de détection (50) pour la détection de grandeurs lors de la réalisation d'une liaison soudée (7) avec l'outil de soudage (41), dans laquelle les au moins deux commandes de soudage (11 à 13 ; 21 à 24 ; 31, 32) sont agencées pour prendre en compte les grandeurs détectées lors de la commande de l'outil de soudage (41).

11. Installation de soudage (2) selon l'une des revendications précédentes, dans laquelle une commande de soudage (11 à 13 ; 21 à 24 ; 31, 32) présente un dispositif de commande (112) pour la commande du transformateur de soudage (43) et de l'outil de soudage (41) de l'installation de soudage (2), et un dispositif de surveillance (115) pour la surveillance de la qualité de la soudure de la liaison soudée (7) réalisée avec l'outil de soudage (41) et l'émission d'un message (161) en référence au résultat de la surveillance.
